**Europäisches Patentamt**

**European Patent Office**

**Office européen des brevets**

(19)

(11) Veröffentlichungsnummer: **0 022 198**
**A1**

(12) # EUROPÄISCHE PATENTANMELDUNG

(21) Anmeldenummer: **80103429.9**

(22) Anmeldetag: **19.06.80**

(51) Int. Cl.³: **G 02 F 1/01**
**F 21 K 2/00, G 02 B 5/16**

(30) Priorität: **04.07.79 DE 2927100**

(43) Veröffentlichungstag der Anmeldung:
**14.01.81 Patentblatt 81/2**

(84) Benannte Vertragsstaaten:
**CH FR GB IT LI NL**

(71) Anmelder: **SIEMENS AKTIENGESELLSCHAFT Berlin
und München**
**Postfach 22 02 61**
**D-8000 München 22(DE)**

(72) Erfinder: **Krüger, Hans, Dipl.-Phys.**
**Peralohstrasse 13**
**D-8000 München 83(DE)**

(72) Erfinder: **Walter, Karl-Heinz, Dipl.-Ing.**
**Herzog-Heinrich-Strasse 13**
**D-8018 Grafing(DE)**

(54) **Anordnung zur Helligkeitsverstärkung von passiven Anzeigevorrichtungen.**

(57) Bisher wurden zur Helligkeitsverstärkung von passiven Anzeigevorrichtungen Fluoreszenzplatten relativ großer Dicke verwendet. In diesen Platten herrscht bei einer gegebenen Konzentration von Fluoreszenzstoffen wegen des großen Volumens relativ geringe Leuchtdichte. Damit ist auch die Helligkeit der Anzeige gering. Die Leuchtdichte läßt sich durch Verwendung von (dünnen) flexiblen fluoreszierenden Folien (1, 4, 5) steigern, da hier die Konzentration an Fluoreszenzstoffen umgekehrt proportional der Dicke erhöht werden kann. Durch die Flexibilität der Folien (1, 4, 5) werden außerdem die konstruktiven Gestaltungsmöglichkeiten erweitert. Die Erfindung wird zum Beispiel bei Flüssigkristallanzeigen angewendet.

FIG 2

EP 0 022 198 A1

SIEMENS AKTIENGESELLSCHAFT          Unser Zeichen
Berlin und München                 VPA    79 P 1 1 1 5 EUR

Anordnung zur Helligkeitsverstärkung von passiven
Anzeigevorrichtungen

Die Anmeldung bezieht sich auf eine Anordnung zum Einfangen, Führen oder gebündeltem Auskoppeln von Licht,
mit einem zum Einfangen des Lichts bestimmten, Fluoreszenzstoffe enthaltenden Kunststoffkörper.

Eine solche Anordnung ist bereits beschrieben worden.
Bei ihr wird eine mit Fluoreszenzstoffen dotierte
Kunststoffplatte zur Helligkeitsverstärkung einer Flüssigkristallanzeige eingesetzt. Das in die Kunststoffplatte eindringende Licht regt die Fluoreszenzstoffe
zur Emission von Licht an, das in der Kunststoffplatte
durch Totalreflexion geführt und beispielsweise durch an
der vom Betrachter abgewandten Seite liegende Kerben
oder aufgedruckte Pigmentschichten ausgekoppelt wird und
als Hintergrundbeleuchtung für die erwähnte Flüssigkristallanzeige dient. Aus Gründen einer guten Ablesbarkeit
der Anzeige soll die Leuchtdichte möglichst hoch
sein.

Hab 1 Dx / 02.07.1979

Der Erfindung liegt die Aufgabe zugrunde, eine Anordnung der obengenannten Art so weiterzubilden, daß eine wirkungsvolle Erhöhung der Leuchtdichte und damit der Helligkeit des ausgekoppelten Lichts möglich ist.

Die Erfindung ist dadurch gekennzeichnet, daß der Kunststoffkörper eine flexible Folie ist.

Weiterbildungen der Erfindung sind Gegenstand der Unteransprüche.

Der Begriff "flexibel" soll einschließen, daß die Folie wesentlich dünner als die bisher verwendeten Platten ist. Damit ist auch das Volumen der Folie bei gleicher Fläche kleiner als das der verwendeten Platten. Wird eine obere Grenze für die Selbstabsorption des Fluoreszenzlichts im Kunststoffkörper zugelassen, so kann im Vergleich zu einer Platte die Konzentration der Fluoreszenzstoffe umgekehrt proportional mit abnehmender Dicke gesteigert werden. Damit geht eine steigende Leuchtdichte in der Folie einher. Entsprechend wächst die Leuchtdichte der Anzeige und ihre Erkennbarkeit wird verbessert.

Ein weiterer Vorteil der Erfindung besteht darin, daß die flexible Folie im Vergleich zur Kunststoffplatte die konstruktiven Gestaltungsmöglichkeiten einer solchen Anordnung erweitert.

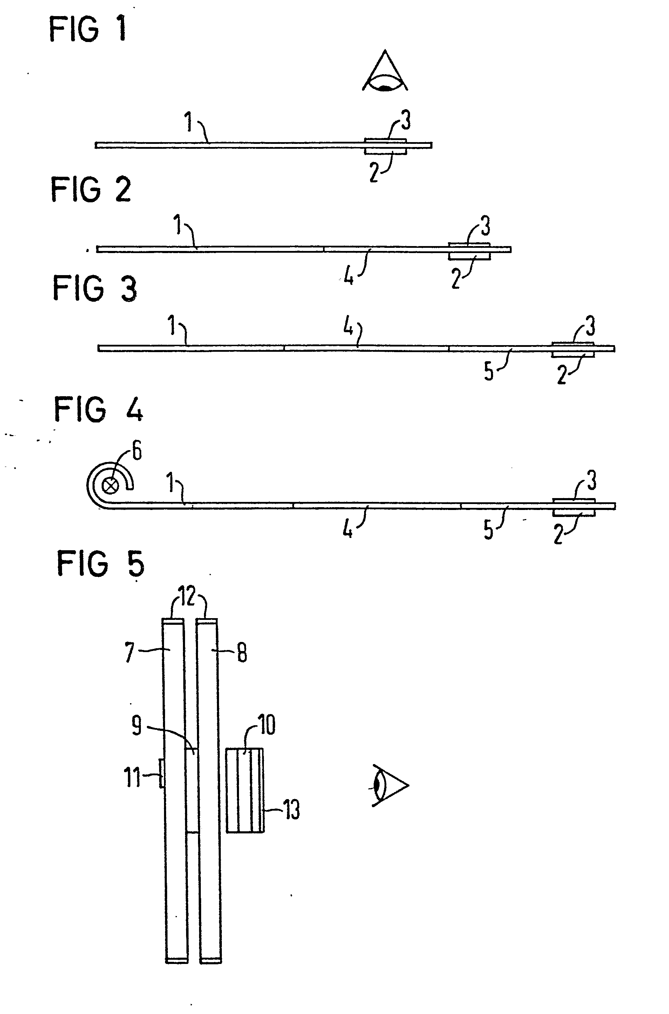

Die Erfindung wird an Hand einiger Ausführungsbeispiele in Verbindung mit den Fig. 1 bis 5 näher erläutert:

In Fig. 1 ist ein erstes Ausführungsbeispiel einer Anordnung zur Helligkeitsverstärkung von passiven Anzeigevorrichtungen dargestellt. Sie besteht im wesentlichen aus einer flexiblen, Fluoreszenzstoffe enthaltenden Kunststoffolie 1. Diese Folie fängt das Licht, zum Beispiel Tageslicht, ein und setzt es in Fluoreszenzlicht um. Dieses wird in bekannter Weise durch Totalreflexion im Inneren der Folie geführt und an einem Austrittsfenster ausgekoppelt. Dieses Austrittsfenster kann beispielsweise eine Pigmentschicht 2 sein, die auf der dem Betrachter abgekehrten Seite der Folie aufgedruckt ist. Die Pigmente können zum Beispiel Titandioxid, Bariumsulfat oder auch metallische Partikel wie Aluminium, Chrom, Silber, Gold oder Platin sein, die zum Beispiel in einer Dicke von 10 bis 50 µm aufgebracht sind. Als Folie kann zum Beispiel Polymethyl-Metacrylat in einer Stärke von 0,5 mm verwendet werden. Auch Folien aus anderen Stoffen mit gleichen Eigenschaften können verwendet werden. Zur Verstärkung der Helligkeit kann auf der der Pigmentschicht 2 gegenüberliegenden Seite noch eine Pigmentschicht 3 aufgedruckt sein, die wesentlich dünner als die Pigmentschicht 2 ist. Das Reflexionsvermögen der Schicht 3 muß wesentlich geringer als das der Pigmentschicht 2 sein. Anstelle des Aufdrucks der Pigmentschicht 2 könnte die Folie auch chemisch oder mechanisch aufgerauht und an der dem Betrachter abgewandten Seite mit einem über die Aufrauhung aufgebrachten, zum Beispiel aufgedampften Reflektor versehen sein.

Das zweite Ausführungsbeispiel in Fig. 2 unterscheidet sich vom ersten dadurch, daß hier zwei Folien verwendet werden, die mit den Stirnflächen stumpf aneinanderstoßend lichtleitend miteinander verbunden sind. Sie können beispielsweise durch einen Kleber miteinander verbunden sein, der den gleichen Brechungsindex hat wie die Folien 1, 4. Die Folie 4 kann beispielsweise transparent sein, so daß sie lediglich zum Führen und Auskoppeln des Lichts dient. Als Auskoppelfenster ist wieder eine Pigmentschicht 2 und eventuell eine zusätzliche Pigmentschicht 3 aufgebracht. Das in der Folie 1 eingefangene Licht wird dann in Form von Fluoreszenzlicht durch die Folien 1 und 4 geführt und tritt an den Pigmentschichten 2, 3 aus. Eine solche Anordnung bringt dann Vorteile, wenn direkt aus der mit Fluoreszenzlicht durchstrahlten Folie ausgekoppelt werden soll.

Es ist auch möglich, die Folie 4 mit Fluoreszenzstoffen zu dotieren. Zweckmäßigerweise enthält sie dann solche Fluoreszenzstoffe, daß sie Licht anderer Wellenlänge absorbiert als die Folie 1. Die Fluoreszenzstoffe in den Folien 1 und 4 müssen außerdem so aufeinander abgestimmt sein, daß das aus der Folie 1 stammende Fluoreszenzlicht nicht in der Folie 4 absorbiert wird. Diese Anordnung kann beispielsweise so ausgelegt werden, daß die Folie 1 Kunstlicht bestimmter Wellenlänge absorbiert, während die Folie 4 für Tageslicht ausgelegt ist.

Ein weiteres Ausführungsbeispiel ist in Fig. 3 dargestellt. In ihm sind wie in Fig. 2 zwei Licht bestimmter unterschiedlicher Wellenlänge absorbierende Folien 1, 4 lichtleitend miteinander verbunden, während eine dritte transparente Folie 5 vorgesehen ist, die lediglich zum Führen und Auskoppeln des Fluoreszenzlichts dient.

Eine Anordnung nach Fig. 3 läßt sich zum Beispiel wirkungsvoll für die Skalenbeleuchtung von Geräten verwenden, wie dies in Fig. 4 dargestellt ist. Ein Ende der Folie 1 umgibt ein Glühlämpchen 6 und fängt dessen Strahlung ein. Das durch die Glühlampe 6 angeregte Fluoreszenzlicht wird dann durch die Folien 1, 4 und 5 zur Pigmentschicht 2 geführt und dort ausgekoppelt. Das Tageslicht wird wie im Ausführungsbeispiel nach Fig. 3 durch die mit Fluoreszenzstoffen dotierte Folie 4 eingefangen, zur Folie 5 geleitet und an der Pigmentschicht 2 ausgekoppelt.

Die beschriebenen fluoreszierenden Folien eignen sich zum Beispiel zur Helligkeitsverstärkung von Flüssigkristallanzeigen. Eine besonders vorteilhafte Ausführungsform ist in Fig. 5 dargestellt. In dieser Anordnung sind zwei polarisiertes Fluoreszenzlicht emittierende flexible Folien 7, 8 vorgesehen, deren Polarisationsebenen um $90^{\circ}$ gegeneinander verdreht sind. Zwischen den Folien 7, 8 ist eine optisch aktive Schicht 9 (zum Beispiel Flüssigkristallpolymer) angeordnet, das die Ebene des von der Folie 7 emittierten polarisierten Lichts um $90^{\circ}$ dreht. Das Licht kann die Folie 8 passieren und trifft auf eine Flüssigkristallanzeige 10 auf, die in bekannter Weise mit einem Polarisator 13 versehen ist. Mindestens die Folie 7 ist mit Lichtauskoppelfenstern versehen, von denen eines dargestellt und mit 11 bezeichnet ist. Es kann durch Kerben oder durch Pigmentaufdrucke gebildet sein, darf jedoch nicht oder nur schwach depolarisieren. Zur Erhöhung des Wirkungsgrades sind die Stirnflächen der Folien 7, 8 mit diffusen Reflektoren 12 versehen, die einen Abstand von 1 bis 2 $\mu$m von den Stirnflächen haben. Dieser Abstand stellt sich durch die Rauhigkeit einer direkt aufgebrachten Schicht, zum Beispiel aus Bariumsulfat oder Titandioxid, praktisch von selbst ein.

Der Vorteil dieser Anordnung liegt in einer gegenüber einer Anordnung mit Fluoreszenzplatte verdoppelten Helligkeit.

10 Patentansprüche
5 Figuren

Patentansprüche

1. Anordnung zum Einfangen, Führen oder gebündeltem Auskoppeln von Licht, mit einem zum Einfangen des Lichts
bestimmten, Fluoreszenzstoffe enthaltenden Kunststoffkörper, d a d u r c h  g e k e n n z e i c h n e t ,
daß der Kunststoffkörper eine flexible Folie (1, 4) ist.

2. Anordnung nach Anspruch 1, d a d u r c h  g e -
k e n n z e i c h n e t ,  daß auf einer Fläche der Folie (1, 4) Auskoppelfenster bildende lichtstreuende Pigmentschichten (2) angebracht sind.

3. Anordnung nach Anspruch 2, d a d u r c h  g e -
k e n n z e i c h n e t ,  daß die Folie (1, 4) auf der
anderen Fläche den Pigmentschichten (2) gegenüberliegend
mit weiteren lichtstreuenden Pigmentschichten (3) versehen ist, die ein wesentlich geringeres Reflexionsvermögen als die erstgenannten Pigmentschichten (2) haben.

4. Anordnung nach Anspruch 1, d a d u r c h  g e -
k e n n z e i c h n e t ,  daß die Folie auf der einen
Fläche mit Auskoppelfenster bildenden Aufrauhungen versehen ist.

5. Anordnung nach Anspruch 1, d a d u r c h  g e -
k e n n z e i c h n e t ,  daß die flexible Folie (1)
mit einer ihrer Stirnflächen stumpf an eine der Stirnflächen einer zweiten Folie (4) anstößt und daß die
Auskoppelfenster auf der zweiten Folie (4) angeordnet
sind.

6. Anordnung nach Anspruch 5, d a d u r c h g e - k e n n z e i c h n e t , daß die zweite Folie (4) transparent ist.

7. Anordnung nach Anspruch 5, d a d u r c h g e - k e n n z e i c h n e t , daß die zweite Folie (4) Fluoreszenzstoffe enthält.

8. Anordnung nach Anspruch 7, d a d u r c h g e - k e n n z e i c h n e t , daß die zweite Folie (4) solche Fluoreszenzstoffe enthält, die Licht anderer Wellenlänge als die erste Folie (1) absorbieren, und daß die Fluoreszenzstoffe der zweiten Folie (4) das aus der ersten Folie (1) stammende Fluoreszenzlicht nicht absorbieren.

9. Anordnung nach Anspruch 1, d a d u r c h g e - k e n n z e i c h n e t , daß die flexible Folie lichtleitend über eine zweite, Fluoreszenzstoffe enthaltende Folie (4) mit einer dritten, transparenten, die Auskoppelfenster tragenden flexiblen Folie (5) verbunden ist.

10. Anordnung nach einem der Ansprüche 1 bis 9, g e - k e n n z e i c h n e t d u r c h zwei hintereinander angeordnete, parallelliegende flexible, Fluoreszenzstoffe enthaltende, polarisierende Folien (7, 8), deren Polarisationsebenen um $90^o$ gegeneinander verdreht sind, durch eine zwischen den Folien (7, 8) liegende optisch aktive Schicht (9), durch auf wenigstens einer der Folien (7) angeordnete Auskoppelfenster (11) und durch eine zwischen Betrachter und Folien (7, 8) liegende den Auskoppelfenstern (11) zugeordnete Flüssigkristallanzeige (10).

**FIG 1**

**FIG 2**

**FIG 3**

**FIG 4**

**FIG 5**

0022198

**EUROPÄISCHER RECHERCHENBERICHT**

Europäisches Patentamt

Nummer der Anmeldung

EP 80 10 3429

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | FR - A - 2 338 455 (W.O. COLLINS) <br> * Seite 1; Ansprüche 1,2; Figuren 1-3 * <br> -- | 1 |
| A | DE - A - 2 724 748 (SIEMENS) <br> * Ansprüche 1,6,8,9,22-24,28; Figuren 1-3,10 * <br> -- | 1-9 |
| A | FR - A - 2 334 163 (SIEMENS) <br> * Seiten 5-9 * <br> & DE - A - 2 554 226 <br> & DE - A - 2 616 669 <br> & DE - A - 2 640 909 <br> -- | 1,10 |
| A | FR - A - 2 326 002 (B.B.C.) <br> * Seite 5, Zeilen 14-17; Seite 8, Zeilen 7-11; Ansprüche 1,2,10,15 * <br> -- | 1 |
| A | FR - A - 2 311 991 (PAYEN DE LA GARANDERIE et al.) <br> * Ansprüche 1-5 * <br> -- | 1 |
| A | GB - A - 2 003 290 (THE SECRETARY OF STATE FOR DEFENCE) <br> * Seiten 2,3 * <br> ---- | 1,10 |

**KLASSIFIKATION DER ANMELDUNG (Int.Cl. 3)**

G 02 F 1/01
F 21 K 2/00
G 02 B 5/16

**RECHERCHIERTE SACHGEBIETE (Int. Cl. 3)**

G 02 F 1/01
　　　　 1/133
　　　　 1/17
G 04 G 9/00
F 21 K 2/00
G 02 B 5/16

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-10-1980 | BORMS |

EPA form 1503.1  06.78